## Europäisches Patentamt
(19) **European Patent Office**
**Office européen des brevets**

(11) Numéro de publication: **0 224 514 B1**

(12) # FASCICULE DE BREVET EUROPEEN

(45) Date de publication du fascicule du brevet:
08.11.89

(51) Int. Cl.⁴: **F 03 B 1/00**

(21) Numéro de dépôt: **86903185.6**

(22) Date de dépôt: **03.06.86**

(86) Numéro de dépôt international:
**PCT/CH 86/00078**

(87) Numéro de publication internationale:
**WO 86/07414 (18.12.86 Gazette 86/27)**

(54) **GROUPE GENERATEUR HYDRO-ELECTRIQUE PORTATIF.**

(30) Priorité: **04.06.85 FR 8508520**

(43) Date de publication de la demande:
**10.06.87 Bulletin 87/24**

(45) Mention de la délivrance du brevet:
**08.11.89 Bulletin 89/45**

(84) Etats contractants désignés:
**AT BE CH DE FR GB IT LI LU NL SE**

(56) Documents cités:
**EP-A- 0 066 508**
**DE-A- 3 247 376**
**DE-C- 125 184**
**DE-C- 464 553**
**DE-C- 566 940**
**GB-A- 9 231**
**GB-A- 2 138 510**
**US-A- 1 327 953**
**US-A- 4 246 753**
**US-A- 4 293 777**

(73) Titulaire: **Kaeser, Charles, 18 chemin de Rennier, CH-1009 Pully (CH)**

(72) Inventeur: **Kaeser, Charles, 18 chemin de Rennier, CH-1009 Pully (CH)**

(74) Mandataire: **Nithardt, Roland, CABINET ROLAND NITHARDT Attn: Cabinet MOSER & CIE Rue Edouard Verdan 15, CH-1400 Yverdon-les-Bains (CH)**

ACTORUM AG

## Description

La présente invention concerne un groupe générateur hydro-électrique portatif, comportant une turbine hydraulique Pelton à plusieurs jets agencée pour être raccordée à une source d'eau sous pression, une génératrice électrique et un dispositif de réglage de la puissance délivrée par la génératrice, la turbine comportant une chambre de distribution connectée à un conduit d'entrée pourvu d'une vanne et une série d'injecteurs.

Pour fournir une alimentation électrique en cas de panne du réseau ou dans des endroits éloignés du réseau électrique public, par exemple pour l'alimentation électrique d'un chalet isolé, on a conçu des groupes générateurs hydro-électriques qui constituent des micro-centrales, alimentées par une adduction d'eau sous pression provenant d'un cours d'eau ou d'un captage. Par rapport aux groupes traditionnels à moteur à combustion interne, l'utilisation d'une turbine hydraulique procure des avantages manifestes sur le plan de la durée de fonctionnement, qui peut être extrêmement longue, de la fiabilité, de la sécurité et du bruit. En revanche, elle nécessite une installation d'adduction qui n'est réalisable qu'à des emplacements peu nombreux et qui est toujours coû-teuse. Cette solution conduit donc à utiliser des groupes qui présentent une puissance assez élevée pour couvrir les besoins d'au moins un ménage, c'est-à-dire plusieurs kilowatts, et qui ne sont pas utilisables comme groupes portatifs.

La demande de brevet GB-A-2 138 510 représen-tant l'état de la technique le plus proche décrit un groupe du genre indiqué en préambule, pourvu de plusieurs vannes de réglage disposées en parallèle et commandant chacune le débit d'eau d'un injecteur respectif. Un régulateur détecte les variations de fréquence du courant électrique produit et il règle en conséquence la puissance du groupe en ouvrant ou en fermant successivement les vannes. Sur le plan constructif, ce dispositif est relativement lourd et complexe, donc coûteux, susceptible de pannes et difficile à transporter. Au point de vue du réglage, le maintien d'une fréquence constante, donc aussi d'une vitesse de rotation constante de la roue Pelton, suppose une pression hydraulique située dans des limites restreintes afin que la vitesse des jets reste compatible avec la vitesse de la roue. Ce groupe générateur connu n'est donc pas utilisable comme appareil mobile que l'on peut brancher à une alimentation d'eau sous pression quelconque.

La présente invention a pour but de fournir un groupe générateur électrique portatif du type mentionné plus haut, se présentant sous la forme d'un ensemble de faible poids et de petit volume, susceptible d'être raccordé au réseau de distribution d'eau qui est disponible pratiquement en permanence et dans tous les endroits habités, cet ensemble étant construit d'une manière particulièrement simple permettant un faible coût de fabrication, un réglage automatique sûr et une grande facilité d'utilisation et d'entretien.

Dans ce but, un groupe générateur selon la présente invention est caractérisé en ce que la vanne du conduit d'entrée est une vanne de réglage du débit d'eau, commandée par le dispositif de réglage de la puissance, en ce que la chambre de distribution a une forme annulaire disposée coaxialement à la roue de la turbine, et en ce que les injecteurs sont constitués chacun d'une seule pièce tubulaire emboîtée dans une ouverture respective de la paroi de cette chambre faisant face à la roue.

Le US-A-4 293 377 décrit un groupe générateur dont la turbine comporte une chambre de distribution annulaire alimentant directement une série d'injecteurs disposés dans sa paroi faisant face à la roue. Toutefois, il ne s'agit pas d'une turbine Pelton mais d'une roue cannelée qui entoure la génératrice. Cette roue est noyée et entraînée par la friction d'un écoulement d'eau circulaire qui s'écoule des injecteurs et qui tourne autour de la roue. Les injecteurs sont simplement des trous obliques ménagés dans la paroi de la chambre. D'autre part, le groupe ne comporte pas de dispositif ou de vanne pour le réglage de la puissance.

Selon une forme de réalisation préférée de la présente invention, chaque injecteur est formé par un tube rectiligne comportant à son extrémité arrière une collerette de retenue. Ce tube est de préférence cylindrique et pourvu d'un conduit axial comprenant deux tronçons successifs de diamètres différents, à savoir un tronçon d'entrée et un tronçon d'éjection, le tronçon d'éjection ayant la forme d'un cylindre dont le diamètre est sensiblement plus petit que le ou les diamètres du tronçon d'entrée. Pour éviter une dispersion du jet, le tronçon d'éjection a une longueur au moins égale à deux fois son diamètre.

Les parois de la chambre de distribution annulaire sont de préférence formées par deux éléments qui constituent ensemble le corps de la turbine.

Grâce à ces dispositions, le corps, les injecteurs et la roue de la turbine peuvent avantageusement être réalisés en matière synthétique moulée.

Dans un groupe selon l'invention, la génératrice est avantageusement à courant alternatif à basse tension, couplée à un redresseur pour délivrer un courant de sortie à basse tension sensiblement continue. De préférence, la génératrice électrique est du type polyphasé synchrone à aimants permanents.

Avec une génératrice à courant alternatif, le réglage de la puissance peut s'effectuer de manière simple. De préférence, le dispositif de réglage comporte un bloc électronique de régulation agencé pour commander le moteur de la vanne de réglage en fonction de la tension continue de sortie du groupe.

Selon une forme de réalisation avantageuse, ce groupe comporte un boîtier pourvu d'une poignée de transport et contenant au moins la turbine, la génératrice et le dispositif de réglage.

A titre d'exemple non limitatif, on décrira ci-dessous une forme de réalisation d'un groupe générateur portatif selon l'invention, en référence aux dessins annexés, dans lesquels:

La figure 1 est une vue générale en perspective d'un groupe générateur électrique portatif selon l'invention,

La figure 2 est une vue en perspective du groupe de la fig. 1, après enlèvement de son boîtier,

La figure 3 est une vue en coupe verticale schématique de la turbine du groupe générateur des fig. 1 et 2,

La figure 4 est une vue en coupe horizontale schématique représentant cette turbine et ses organes de distribution, et

La figure 5 est un schéma du dispositif de réglage automatique du groupe.

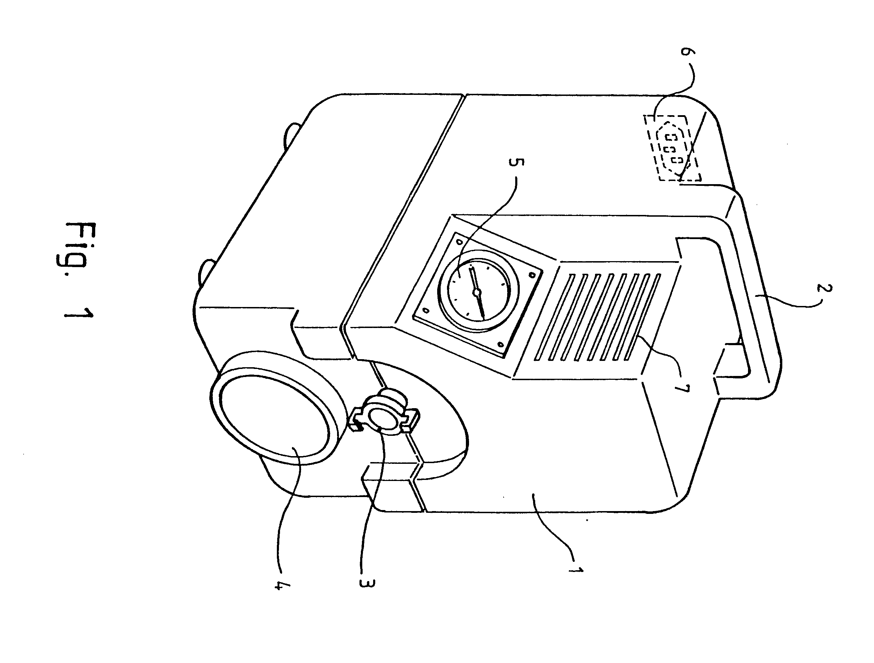

Le groupe générateur portatif illustré sur la fig. 1 se présente sous la forme d'un ensemble compact et léger enfermé dans un boîtier 1 en matière synthétique isolante, pourvu d'une poignée de transport 2. Extérieurement, le groupe comporte un raccord d'entrée 3 pour être relié à une source d'eau sous pression, un conduit d'évacuation 4 de l'eau utilisée, un manomètre 5 indiquant la pression de l'eau, une prise de courant électrique 6 à basse tension, et des ouïes d'aération 7.

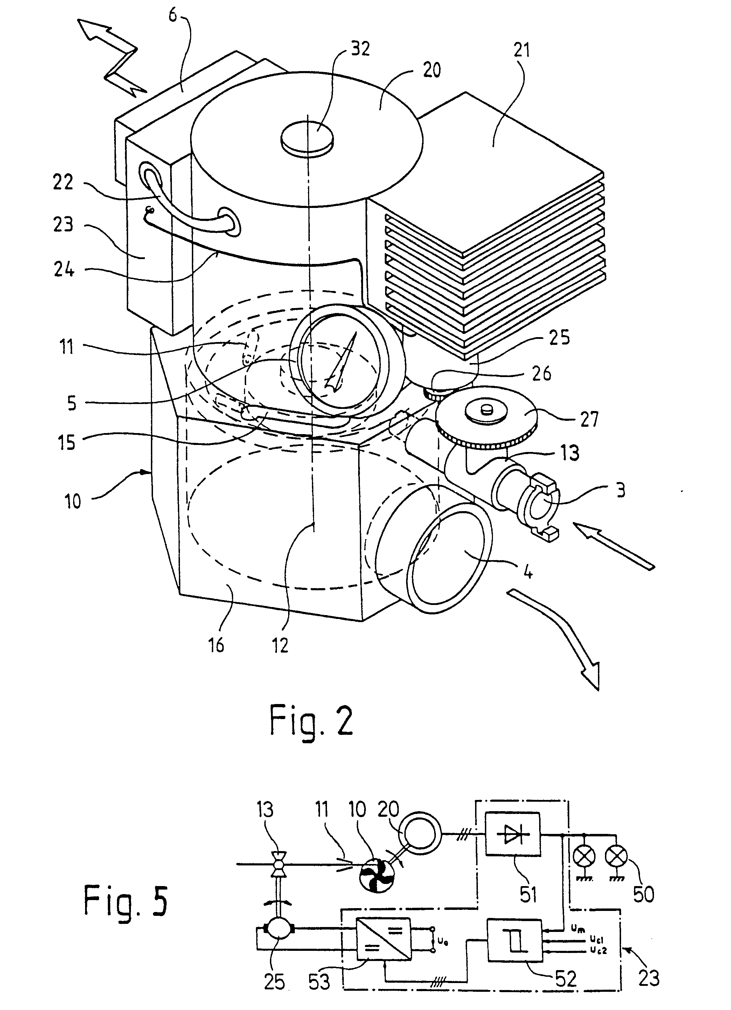

La fig. 2 représente d'une manière plus détaillée les organes essentiels de ce groupe générateur, tels qu'ils apparaissent après enlèvement du boîtier 1. La partie inférieure du groupe est formée par une turbine Pelton 10 à plusieurs injecteurs 11 et à axe vertical 12. L'entrée de la turbine est raccordée au raccord d'entrée d'eau 3 par l'entremise d'une vanne de réglage 13, tandis que sa sortie est raccordée au conduit d'évacuation 4. Les organes de distribution de la turbine, qui seront décrits plus loin plus en détail, sont reliés au manomètre 5 par une prise de pression 15. L'ensemble de la turbine, à l'exception de la vanne de réglage 13, est renfermé dans un corps étanche 16 en matière synthétique, constitué de deux éléments vissés l'un à l'autre.

Une génératrice électrique 20 est montée au-dessus de la turbine 10 et sur le même axe. Dans la forme de réalisation préférée décrite ici, cette génératrice est du type triphasé synchrone dont le rotor comporte des aimants permanents, c'est-à-dire qu'il n'a pas besoin de courant d'excitation. A cet égard, un rotor à aimants tangentiels s'est avéré aussi efficace d'un rotor à aimants radiaux, tout en étant moins cher et plus sûr au point de vue de la fixation des aimants. Ce point est important dans une machine appelée à fonctionner à des vitesses variées, pouvant aller par exemple jusqu'à 12 000 tours/min. Pour son refroidissement, la génératrice 20 est équipée d'un radiateur à ailettes 21 qui est fixé sur l'enveloppe extérieure métallique de la génératrice.

Les courants triphasés produits par la génératrice 20 sont transmis par un câble 22 à un bloc électronique 23 renfermant notamment un redresseur triphasé, qui délivre sur la prise de courant 6 une tension continue nominale de 24 V. Grâce à cette basse tension, l'utilisation de ce groupe et des récepteurs qu'il alimente ne présente pas de danger, même si de l'humidité atteint accidentellement la partie électrique de l'appareil.

Pour régler la puissance du groupe, d'une manière qui sera décrite plus loin en référence à la fig. 5, le bloc 23 alimente, par un câble 24, un moteur 25 qui commande la vanne de réglage 13 par l'intermédiaire d'un pignon d'entraînement 26 monté sur l'arbre du moteur 25 et d'une couronne dentée 27 fixée sur l'arbre d'actionnement de la vanne 13. La couronne 27 comporte deux arrêts (non représentés) qui correspondent respectivement à la position fermée et à la position ouverte de la vanne et qui actionnent des contacts reliés au bloc électronique 23 pour arrêter l'alimentation du moteur 25 quand la vanne est à bout de course.

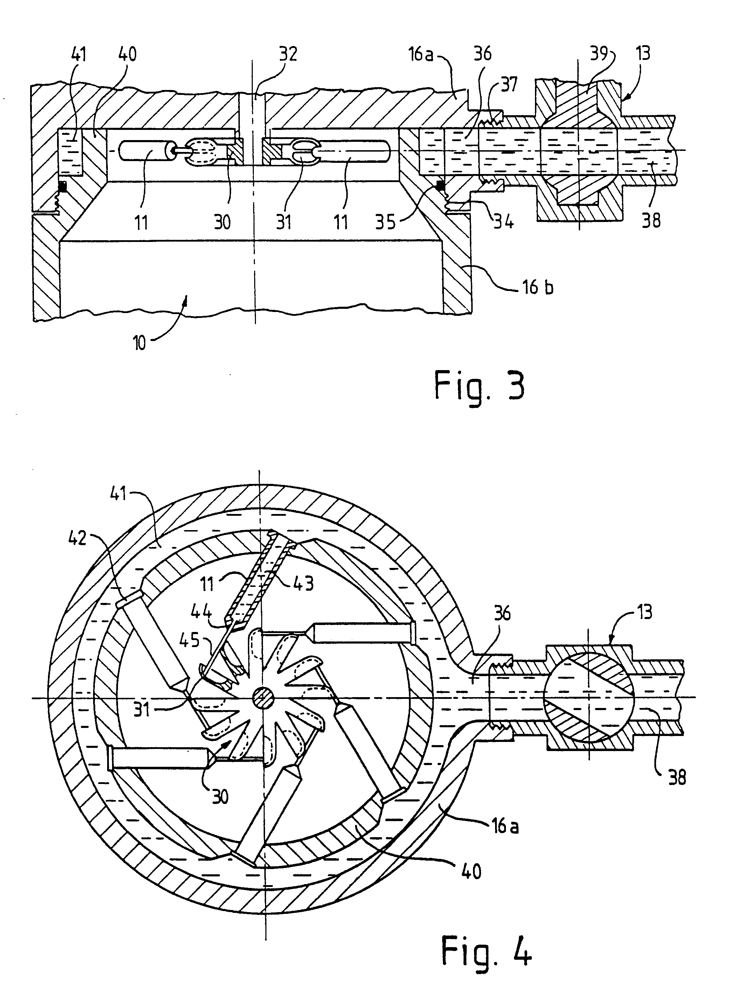

Les fig. 3 et 4 représentent plus en détail l'intérieur de la turbine 10. Il s'agit en fait d'une turbine du type Pelton à plusieurs injecteurs 11, dont les organes de distribution et de commande se présentent sous une forme extrêmement simple. La turbine comporte une roue 30 à aubes 31 de forme classique à augets doubles, mais de dimensions extrêmement réduites. Pour les applications décrites plus loin, le diamètre de la roue est de l'ordre de quelques centimètres. Cette roue peut avantageusement être fabriquée en grande série en matière synthétique moulée. Elle est fixée directement sur l'extrémité inférieure de l'arbre 32 de la génératrice.

Le corps 16 de la turbine est constitué par un élément supérieur 16a et un élément inférieur 16b qui sont vissés l'un à l'autre par un raccord fileté 34. L'étanchéité est assurée entre ces deux éléments au moyen d'un joint annulaire 35 comprimé dans un logement approprié. L'élément supérieur 16a comporte un orifice latéral 36 qui est raccordé par un raccord fileté 37 à la vanne de réglage 13, comprenant un conduit d'entrée 38 de la turbine. Dans l'exemple représenté, cette vanne est du type sphérique avec un organe d'obturation 39, solidaire d'un arbre sur lequel est fixée la couronne dentée 27 représentée sur la fig. 2. Le passage de l'eau à travers l'organe d'obturation 39 peut être de section circulaire, égale à celle du conduit 38, ou d'une autre forme spécialement agencée pour favoriser la stabilité du réglage automatique.

La partie inférieure 16b du corps de la turbine 10 est pourvue d'un rebord intérieur 40 de forme cylindrique, qui s'emboîte dans l'élément supérieur 16a, mais à une certaine distance de la paroi périphérique de cet élément, pour délimiter entre les deux éléments 16a et 16b une chambre annulaire 41 servant de chambre de distribution. Cette chambre annulaire est disposée coaxialement à la roue 30 et au même niveau qu'elle et que le conduit d'entrée 38, avec lequel elle communique par l'orifice 36. La paroi intérieure de la chambre de distribution 41, constituée par le rebord 40, comporte une série d'alésages sensiblement cylindriques, qui sont orientés tangentiellement à la roue 30 et dans lesquels sont emboîtés les injecteurs 11. Ceux-ci comportent à leur extrémité arrière une collerette 42 qui les retient axialement et qui assure l'étanchéité. S'il le faut, on peut placer un joint d'étanchéité entre la collerette 42 et le rebord 40. Dans l'exemple représenté, les injecteurs 11 sont au nombre de 6, mais ce nombre pourrait évidemment être différent, selon l'énergie hydraulique dont on dispose. Le cas échéant, on pourrait remplacer certains des injecteurs 11 par des bouchons si le débit d'eau disponible est faible.

Sur la fig. 4, l'un des injecteurs 11 est représenté en coupe pour montrer sa forme interne. L'injecteur 11 a la forme d'un tube rectiligne, pourvu d'un conduit axial comprenant deux tronçons successifs de diamètres différents, c'est-à-dire un tronçon d'entrée 43 dont le diamètre est relativement grand et qui s'étend sur la plus grande partie de la longueur de l'injecteur, et un tronçon cylindrique d'éjection 44 dont le diamètre est sensiblement plus petit. Le tronçon d'entrée 43 peut être cylindrique ou légèrement conique. Afin de diminuer les pertes de charge, le diamètre minimal du tronçon d'entrée 43 est un multiple de celui du tronçon 44. Entre les tronçons 43 et 44, le conduit axial de l'injecteur présente une variation brusque du diamètre, en aval de laquelle l'eau s'écoule dans le conduit d'éjection sans turbulence excessive. Cependant, pour produire un jet à faible dispersion, le tronçon d'éjection 44 présente une longueur qui est un multiple de son diamètre. De préférence, cette longueur représente deux à trois fois le diamètre de ce tronçon.

L'eau sous pression arrivant par le conduit d'entrée 38 et traversant la vanne 13 se répartit avec une pression sensiblement uniforme dans la chambre de distribution 41, qui alimente donc sous la même pression l'ensemble des injecteurs 11. Ceux-ci transforment l'énergie de pression de l'eau en énergie cinétique, en formant chacun un jet 45 qui frappe les aubes 31 de manière à faire tourner la roue 30. L'eau quitte ensuite les aubes en s'écartant de l'axe de la turbine et elle tombe librement dans la partie inférieure 16b du corps, pour atteindre l'évacuation d'eau 4 (fig. 2).

La construction de la chambre annulaire 41 décrite ci-dessus permet ainsi d'utiliser un seul organe de réglage du débit, c'est-à-dire la vanne 13, pour l'ensemble des injecteurs 11. En outre, les injecteurs n'ont pas besoin d'occuper une position précise par rapport à l'orifice latéral 36 de la chambre de distribution. Enfin, en séparant les deux éléments 16a et 16b qui forment le corps de la turbine, on peut contrôler et entretenir très facilement la turbine, notamment remplacer les injecteurs et la roue. On peut modifier aisément la plage de la puissance utilisable de la turbine en remplaçant les injecteurs par d'autres qui ont un débit différent. Il faut remarquer à ce propos que, comme toutes ces pièces sont fabriquées en matière synthétique moulée, leur remplacement n'est pas coûteux.

La fig. 5 illustre schématiquement les circuits de réglage automatique du groupe générateur, en fonction de la charge électrique des consommateurs 50. Le bloc électronique 23 comporte un redresseur triphasé 51 qui reçoit les tensions alternatives fournies par la génératrice 20 et délivre une tension continue Um d'environ 24V aux consommateurs et à un régulateur 52 intégré au bloc 23. En outre, cette tension est limitée pour éviter des valeurs excessives pendant la fermeture de la vanne 13. Si Um descend en dessous d'une limite inférieure Uc1, par exemple 23V, le régulateur 52 agit sur un convertisseur 53 qui alimente le moteur 25 de manière à fermer la vanne 13 jusqu'à ce que la turbine 10 fournisse à la génératrice une puissance suffisante pour rétablir la tension. En même temps, la vitesse de rotation augmente. Inversement, si Um dépasse une limite supérieure Uc2, par exemple 25V, le régulateur 52 commande la fermeture de la vanne.

Un groupe générateur portatif tel que décrit ci-dessus s'est avéré utilisable avec des pressions hydrauliques très diverses, comprises entre 1 et 7 bars, en fournissant des puissances électriques comprises entre 100 et 300W. On a mesuré un rendement global d'environ 50%, avec des rendements partiels de 65 à 68% pour la turbine Pelton, 80 à 85% pour la génératrice à aimants permanents (8 pôles) et 85 à 90% pour le redresseur et le dispositif de réglage. Avec seulement 5 bars de pression, le groupe était capable d'alimenter 10 lampes fluorescentes de 13W.

La construction décrite ci-dessus permet de réaliser un groupe générateur portatif de très petite dimension et de faible poids. En particulier, la turbine 10 fabriquée entièrement en matière synthétique est beaucoup plus légère qu'un moteur à essence de puissance équivalente. En outre, il n'est pas nécessaire de transporter et de stocker une réserve de carburant.

Un tel groupe générateur est utilisable partout où l'on dispose d'une source d'eau sous pression et évidemment d'une évacuation de l'eau. Par exemple, il peut être branché à un robinet dans une salle de bain ou dans une cuisine, sans que son fonctionnement cause une gêne quelconque aux occupants de bâtiment. A l'extérieur, il peut être raccordé par exemple à un robinet de jardin, une bouche d'incendie ou toute autre prise sur un réseau de distribution d'eau sous pression. Le groupe peut également être raccordé à une adduction fixe ou provisoire provenant d'une prise d'eau installée dans un ruisseau, notamment à la montagne, pourvu que l'on dispose, entre la prise d'eau et le groupe, d'une dénivellation assurant une pression suffisante. Par exemple, avec un débit de 1 1/s sous une pression de 4 bars, la puissance hydraulique disponible est de 400W, dont environ la moitié peut être transformée en énergie électrique par le groupe générateur portatif. Ces valeurs ne sont données qu'à titre d'exemple; il est évident qu'un groupe générateur selon l'invention peut également être conçu pour utiliser une puissance hydraulique notablement plus grande.

En plus du fait qu'on dispose d'une source d'eau sous pression de plusieurs bars dans pratiquement tous les lieux habités, le groupe générateur selon l'invention a l'avantage de pouvoir fonctionner automatiquement pendant une longue durée, sans nécessiter des contrôles, des ravitaillements en carburant ou des opérations d'entretien. Il est silencieux, propre et sans danger. C'est pourquoi il est également avantageux pour alimenter en électricité des consommateurs éloignés de tout réseau de distribution électrique, par exemple un bâtiment isolé, l'éclairage d'un chantier ou d'une installation temporaire, pour entretenir la charge d'une batterie d'accumulateurs, etc...

## Revendications

1. Groupe générateur hydro-électrique portatif, comportant une turbine hydraulique Pelton à plusieurs jets (10) agencée pour être raccordée à une source d'eau sous pression, une génératrice électrique (20) et un dispositif de réglage de la puissance délivrée par la génératrice, la turbine comportant une chambre de distribution (41) de forme annulaire connectée à un conduit d'entrée (38) pourvu d'une vanne (13), et une série d'injecteurs (11), caractérisé en ce que la vanne (13) du conduit d'entrée est une vanne de réglage du débit d'eau, commandée par le dispositif de réglage de la puissance, en ce que la chambre de distribution (41) a une forme annulaire disposée coaxialement à la roue (30) de la turbine, et en ce que les injecteurs sont constitués chacun d'une seule pièce tubulaire emboîtée dans une ouverture respective de la paroi (40) de cette chambre faisant face à la roue.

2. Groupe générateur selon la revendication 1, caractérisé en ce que chaque injecteur (11) est formé par un tube rectiligne comportant à son extrémité arrière une collerette extérieure de retenue (42).

3. Groupe générateur selon la revendication 2, caractérisé en ce que chaque injecteur (11) est un tube cylindrique rectiligne pourvu d'un conduit axial comprenant deux tronçons successifs de diamètres différents, à savoir un tronçon d'entrée (43) et un tronçon d'éjection (44), le tronçon d'éjection ayant la forme d'un cylindre dont le diamètre est sensiblement plus petit que le ou les diamètres du tronçon d'entrée.

4. Groupe générateur selon la revendication 3, caractérisé en ce que ledit tronçon d'éjection (44) a une longueur au moins égale à deux fois son diamètre.

5. Groupe générateur selon la revendication 1, caractérisé en ce que les parois de la chambre de distribution annulaire (41) sont formées par deux éléments (16a et 16b) qui constituent ensemble le corps (16) de la turbine.

6. Groupe générateur selon la revendication 5, caractérisé en ce que le corps (16), les injecteurs (11) et la roue (30) de la turbine sont en matière synthétique moulée.

7. Groupe générateur selon l'une quelconque des revendications précédentes, caractérisé en ce que la génératrice électrique (20) est du type à courant alternatif à basse tension, couplée à un redresseur pour délivrer un courant de sortie à basse tension sensiblement continue.

8. Groupe générateur selon la revendication 7, caractérisé en ce que la génératrice électrique (20) est du type polyphasé synchrone à aimants permanents.

9. Groupe générateur selon la revendication 7, caractérisé en ce que le dispositif de réglage comporte en bloc électronique de régulation (23), agencé pour commander le moteur (25) de la vanne de réglage (13) en fonction de la tension continue de sortie du groupe.

10. Groupe générateur selon l'une quelconque des revendications précédentes, caractérisé en ce qu'il comporte un boîtier (1) pourvu d'une poignée de transport (2) et contenant au moins la turbine, la génératrice et le dispositif de réglage.

**Patentansprüche**

1. Tragbare hydroelektrische Generatorgruppe, bestehend aus einer Pelton-Wasserturbine mit mehreren Düsen (10), die für den Anschluß an einer Druckwasserquelle eingerichtet ist, einem elektrischen Generator (20) und einer Einrichtung für die Regelung der Leistung, die von dem Generator geliefert wird, wobei die Turbine aus einer ringförmigen Verteilungskammer (41), die mit einem Einlaufrohr (38), das mit einem Schieber (13) und einer Reihe von Düsen (11) versehen ist, verbunden ist, dadurch gekennzeichnet, daß der Schieber (13) des Einlaufrohres ein Regelschieber für die Wassermenge ist, der von der Einrichtung für die Regelung der Leistung gesteuert ist, daß die Verteilkammer (41) ringförmig gestaltet und koaxial zum Laufrad (30) der Turbine angeordnet ist und daß jede der Düsen aus einem einzigen rohrförmigen Teil besteht, der in eine entsprechende Öffnung der Wandung (40) dieser Kammer gegenüber dem Laufrad eingepaßt ist.

2. Generatorgruppe gemäß Anspruch 1, dadurch gekennzeichnet, daß jede Düse (11) aus einem geradlinigen Rohr besteht, das an seinem hinteren Ende einen äußeren Haltebund (42) aufweist.

3. Generatorgruppe gemäß Anspruch 2, dadurch gekennzeichnet, daß jede Düse (11) aus einem geradlinigen zylindrischen Rohr besteht, das mit einer axialen Leitung versehen ist, die zwei aneinanderfolgenden Rohrstücke von verschiedenen Durchmessern und zwar ein Zulaufrohrstück (43) und ein Auslaufrohrstück (44) enthält, wobei das Auslaufrohrstück die Form eines Zylinders hat, dessen Durchmesser wesentlich kleiner als der oder die Durchmesser des Zulaufrohrstücks ist.

4. Generatorgruppe gemäß Anspruch 3, dadurch gekennzeichnet, daß das besagte Auslaufrohrstück (44) eine Länge aufweist, die mindestens das zweifache seines Durchmessers beträgt.

5. Generatorgruppe gemäß Anspruch 1, dadurch gekennzeichnet, daß die Wandungen der ringförmigen Verteilungskammer (41) durch zwei Teile (16a und 16b) geformt sind, die zusammen das Gehäuse (16) der Turbine bilden.

6. Generatorgruppe gemäß Anspruch 5, dadurch gekennzeichnet, daß das Gehäuse (16), die Düsen (11) und das Laufrad (30) der Turbine aus Kunststoff geformt sind.

7. Generatorgruppe gemäß einem der Ansprüche 1-6, dadurch gekennzeichnet, daß der elektrische Generator der Bauart für Wechselstrom mit niederer Spannung entspricht und mit einem Gleichrichter gekoppelt ist, um einem elektrischen Strom mit einer annähernd gleichen niederen Spannung zu liefern.

8. Generatorgruppe gemäß Anspruch 7, dadurch gekennzeichnet, daß der elektrische Generator (90) in der mehrphasigen, synchronen, mit Dauermagneten versehenen Bauart ausgeführt ist.

9. Generatorgruppe gemäß Anspruch 7, dadurch gekennzeichnet, daß die Einrichtung für die Regelung ein elektronisches Regelungsmodul (23) enthält, das vorgesehen ist, um den Motor (25) des Regelschiebers (13) in Abhängigkeit der Gleichspannung am Ausgang der Gruppe zu steuern.

10. Generatorgruppe gemäß einem der Ansprüche 1-9, dadurch gekennzeichnet, daß sie einen Mantel (1) besitzt, der mit einem Traggriff versehen ist und mindestens die Turbine, den Generator und die Regeleinrichtung enthält.

**Claims**

1. Portable hydro-electric generating unit, comprising a Pelton hydraulic turbine with several jets (10) designed to be connected to a source of pressurised water, an electric generator (20) and a controlling device of the power supplied by the generator, the turbine comprising a ring shaped distribution chamber (41) connected to an inlet pipe (38) provided with a valve (13), and a series of injectors (11), characterised in that the valve (13) of the inlet pipe is a valve for regulating the flow of water, controlled by the power-regulating device, in that the distribution chamber (41) is ring-shaped and is arranged coaxially with the wheel (30) of the turbine, and in that each injector consists of a single tubular piece encased in a respective opening in the wall (40) of this chamber facing the wheel.

2. Generator unit according to claim 1, characterised in that each injector (11) comprises rectilinear tube comprising an outer holding flange at its rear end (42).

3. Generator unit according to claim 2, characterised in that each injector (11) is a cylindrical rectilinear tube provided with an axial conduit comprising two successive sections of different diameters, i.e. an inlet section (43) and an exit section (44), the exit section having the form of a cylinder whose diameter is considerably smaller than the diameter or diameters of the inlet sections.

4. Generator unit according to claim 3, characterised in that the said exit section (44) has a length which is at least twice its diameter.

5. Generator unit according to claim 1, characterised in that the walls of the ring-shaped distribution chamber (41) consist of two elements (16a and 16b) which together make up the body (16) of the turbine.

6. Generator unit according to claim 5, characterised in that the body (16), the injectors (11) and the wheel (30) of the turbine are made from a moulded synthetic material.

7. Generator unit according to any one of the preceding claims, characterised in that the electric generator (20) is of the low voltage alternating current type, coupled to a rectifier so as to produce an appreciably continuous exit current.

8. Generator unit according to claim 7, characterised in that the electric generator (20) is of the polyphase synchronised type with permanent magnets.

9. Generator unit according to claim 7, characterised in that the regulating device comprises an electronic regulation block (23), designed to control the motor (25) of the regulating valve (13) depending on the continuous exit voltage of the unit.

10. Generator unit according to any one of the preceding claims, characterised in that it comprises a housing (1) provided with a carrying handle (2) and containing at least the turbine, the generator and the regulating device.

## Fig. 1

Fig. 2

Fig. 5

Fig. 3

Fig. 4